# EUROPEAN PATENT SPECIFICATION

(11) **EP 3 724 148 B1**
(45) Date of publication and mention of the grant of the patent: **14.08.2024**
(21) Application number: 17826135.0
(22) Date of filing: 13.12.2017
(51) Int. Cl.: C04B 28/14, C04B 24/26, C04B 111/34

(54) **GYPSUM COMPOSITIONS WITH ENHANCED RESISTANCE TO PERMANENT DEFORMATION**
GIPSZUSAMMENSETZUNGEN MIT VERBESSERTER BESTÄNDIGKEIT GEGEN BLEIBENDE VERFORMUNG
COMPOSITIONS DE GYPSE PRÉSENTANT UNE RÉSISTANCE AMÉLIORÉE À LA DÉFORMATION PERMANENTE

(43) Date of publication of application: 21.10.2020
(73) Proprietor: Knauf Gips KG, 97346 Iphofen (DE)
(72) Inventor: SCHUG, Benedikt, 97353 Wiesentheid (DE); MANDEL, Karl, 97261 Güntersleben (DE); SCHOTTNER, Gerhard, 91560 Heilsbronn-Bürglein (DE)
(86) International application number: PCT/EP2017/001421
(87) International publication number: WO 2019/114916

(56) References cited:
- EP-A1- 2 784 040
- WO-A1-2005/087685
- US-A- 5 534 059
- US-A1- 2006 281 837
- SCHUG BENEDIKT ET AL: "A mechanism to explain the creep behavior of gypsum plaster", CEMENT AND CONCRETE RESEARCH, PERGAMON PRESS, ELMSFORD, NY, US, vol. 98, 5 May 2017 (2017-05-05), pages 122 - 129, XP085020753, ISSN: 0008-8846, DOI: 10.1016/J.CEMCONRES.2017.04.012

## Description

The invention relates to a method for preparation of building materials comprising a calcium sulfate material and an enhancing material as well as use of the enhancing material for preparation of building materials.

The term "calcium sulfate material", as used herein, may include gypsum (calcium sulfate dihydrate), calcium sulfate hemihydrate and/or calcium sulfate anhydrite).

Calcined calcium sulfate especially plaster is a material of diverse industrial use.

Typically, products containing a calcium sulfate material, preferably gypsum, are prepared by forming a mixture of calcined natural gypsum (calcium sulfate hemihydrate and/or calcium sulfate anhydrite) and water (and other components, as appropriate). The mixture is cast into a desired shape or onto a surface, and then allowed to harden to form set rehydrated gypsum by reaction of the calcined gypsum with the water to form a matrix of crystalline hydrated gypsum (calcium sulfate dihydrate). It is the desired hydration of the calcined gypsum that enables the formation of an interlocking matrix of set gypsum crystals, thus imparting strength to the gypsum structure in the gypsum-containing product. Heating is utilized to drive off the remaining free water to yield a dry product.

One problem with such gypsum-containing products is that they often are subject to permanent deformation such as sag, especially under conditions of high humidity, temperature, or load. For example, the possibility of sag is particularly problematic where gypsum-containing boards and tiles are stored or employed in a manner in which they are positioned horizontally. In this respect, if the set gypsum matrix in these products is not sufficiently resistant to permanent deformation, the products may start to sag in areas between the points to which they are fastened, or supported by, an underlying structure. This can be unsightly and can cause difficulties during use of the products. Furthermore, in many applications, gypsum-containing products must be able to carry loads, e.g., insulation or condensation loads, without perceptible sag.

Another problem with such set gypsum-containing products is that dimensional stability can be compromised during their manufacture, processing, and commercial application. For example, in the preparation of set gypsum products, there is usually a significant amount of free (i.e., unreacted) water left in the matrix after the gypsum has set. Upon drying of the set gypsum in order to drive off the excess water, the interlocking set gypsum crystals in the matrix tend to move closer together as the water evaporates. In this respect, as the water leaves the crystal interstices of the gypsum matrix, the matrix tends to shrink from natural forces of the set gypsum that were resisting capillary pressure applied by the water on the gypsum crystals. As the amount of water in the aqueous calcined gypsum mixture increases, lack of dimensional stability becomes more of a problem.

Dimensional stability is also of concern even after the final dried product is realized, especially under conditions of changing temperature and humidity where set gypsum is susceptible to, for example, expansion and shrinkage. For example, moisture taken up in crystal interstices of a gypsum matrix of a gypsum board or tile exposed to high humidity and temperature can aggravate a sagging problem by causing the humidified board to expand.

EP 1 114 005 B1 discloses a method for producing a set gypsum-containing product having increased resistance to permanent deformation, wherein a mixture of a calcium sulfate material, water, an accelerator and an enhancing material is formed, wherein the enhancing material is chosen from condensed phosphonic acids, for example sodium trimetaphosphate.

US 6,409,824 B1 discloses the use of various compounds such as polyphosphonic compounds, ulexite, colemanite, or carboxylic compounds to prepare gypsum compositions with sag resistance.

US 2006/281837 A1 discloses the use of copolymers comprising at least three repeating units, namely acrylic acid-type repeating units, maleic acid-type repeating units and polyoxyalkylether repeating units as dispersants in calcium sulfate hemihydrate compositions.

However, there is still an industrial need for new enhancing materials, which provide for calcium sulfate material compositions with enhanced resistance to permanent deformation. It is the object of the present invention to provide a method for preparation of building materials comprising a calcium sulfate material with enhancing materials, which provide an enhanced or alternative solution to the above described existing problems. This object is solved by the method of the present invention.

A method of the present invention is a method for preparation of a building material comprising the step of
- preparing a composition comprising calcium sulfate hemihydrate, water and an enhancing material
   wherein the enhancing material is selected from the group consisting of poly(acrylic acid-co-maleic acid), poly(ethylene-alt-maleic anhydride), poly(methyl vinyl ether-alt-maleic acid), poly[ (isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

The building material prepared according to the above-mentioned method shows better results according to the resistance to permanent deformation compared to building materials without enhancing materials.

Within this application, the term "monomer" does not only refer to the individual molecules from which a polymer may be formed; for example an acrylic acid molecule is a monomer from which polyacrylic acid may be formed. The term "monomer" also refers to the subunit of a polymer which forms the smallest repeating unit in this polymer; for example the repeating subunit in polyacrylic acid is an acrylic acid monomer.

Within this application, the term "derivative" when used with respect to carboxylic acid refers to any compound exhibiting a R-(C=O)-Y moiety, wherein R is any moiety bound to C by a carbon atom, and Y is any moiety bound to C by an atom which is not a carbon atom, preferably O or S. Typical examples for R are hydrocarbons featuring at least one double or triple carbon-carbon bond and from 2 to 12, preferably from 2 to 6, more preferably from 2 to 4 or from 3 to 4 carbon atoms. These moieties may comprise hetero atoms such as O and may be substituted, preferably by halogen atoms, for example F, Cl or Br. Typical derivatives of carboxylic acids comprise esters, amides, anhydrides, carboxylates and salts thereof, thioesters, thiocarboxylic acids, thiocarboxylates and salts thereof. Typical counter cations in said salts include an alkali metal ion, an alkali earth metal ion, ammonium or alkyl ammonium, preferably wherein the alkyl part(s) comprise(s) from 1 to 6, preferably from 1 to 4 or more preferably from 2 to 4 carbon atoms.

The enhancing material is selected from the group consisting of poly(acrylic acid-co-maleic acid), poly(ethylene-alt-maleic anhydride), poly(methyl vinyl ether-alt-maleic acid), poly[(isobutylene-alt-maleic acid X salt)-co-(isobutylene-alt-maleic anhydride)], wherein X is selected from the group consisting of an alkali metal ion, an alkali earth metal ion, ammonium or alkyl ammonium, preferably wherein the alkyl part(s) comprise(s) from 1 to 6, preferably from 1 to 4 or more preferably from 2 to 4 carbon atoms.

In some embodiments the polymer may be a blockcopolymer, an alternating copolymer, a periodic polymer, a statistical copolymer or even a terpolymer or a quarterpolymer. Preferably, the at least two different monomers in the polymer are alternating.

In some embodiments, the enhancing material has a relative molecular weight of from 1000 g/mol to 1000000 g/mol, preferably of from 1000 g/mol to 500000 g/mol, more preferably of from 2000 g/mol to 500000 g/mol.

In some embodiments, the amount of the enhancing material is within a range of from 0.001 to 2% by weight, preferably of from 0.01 to 1% by weight, more preferably of from 0.01 to 0.5% by weight, referred to the amount of calcium sulfate hemihydrate.

In one embodiment of the invention, preparation of a composition comprising calcium sulfate hemihydrate, water and enhancing material comprises at least one of the steps of
- addition of the enhancing material to calcium sulfate hemihydrate prior to addition of water; or
- addition of the enhancing material to water prior to the addition of calcium sulfate hemihydrate; or
- simultaneous addition of the enhancing material and water to calcium sulfate hemihydrate; or
- addition of the enhancing material to calcium sulfate hemihydrate to obtain a first composition and addition of the enhancing material to water to obtain a second composition and addition of said first composition to said second composition
- coating of the calcium sulfate hemihydrate with the enhancing material.

This means that mixing of the enhancing material and the calcium sulfate (CaSO₄) hemihydrate may happen prior to the addition of water, or after the addition of water to any enhancing material. It is also possible to mix enhancing material and CaSO₄ hemihydrate simultaneously to the addition of water, or the enhancing material and CaSO₄ hemihydrate are each mixed with water prior to mixing enhancing material and CaSO₄ hemihydrate.

In one embodiment of the invention, if first the water is mixed with the enhancing material, the pH of the water mixed with the enhancing material is lower than 2.

In another embodiment of the invention, if first the water is mixed with the enhancing material, the pH of the water mixed with the enhancing material is at least 2 or higher than 2, preferably between 2 and 7, more preferably between 4 and 6, by addition of a base (e.g. NaOH).

Surprisingly, the preferred pH values at between 2 and 7, and more preferred between 4 and 6 show improved results in the building material.

One embodiment provided by the present invention, is a building material comprising a calcium sulfate material, preferably gypsum, and an enhancing material, wherein the enhancing material selected from the group consisting of poly(acrylic acid-co-maleic acid), poly(ethylene-alt-maleic anhydride), poly(methyl vinyl ether-alt-maleic acid), poly[ (isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

Yet another embodiment of the invention is the use of such an enhancing material for the preparation of building materials comprising a calcium sulfate material, preferably gypsum, having enhanced resistance to permanent deformation, wherein the enhancing material is selected from the group consisting of poly(acrylic acid-co-maleic acid), poly(ethylene-alt-maleic anhydride), poly(methyl vinyl ether-alt-maleic acid), poly[ (isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

While the problem of permanent deformation of gypsum building material has been solved to some degree as described in prior art documents, there is still an industrial need for alternatives or enhanced compounds in contrast to known enhancing materials, e.g. for situations in which the application of known enhancing materials is not feasible.

Surprisingly, it has been found that the enhancing material of the present invention provides for building materials, which exhibit very good properties with respect to a permanent deformation without impairing the overall quality of the building material. This is exemplified by the fact that sag deflection is greatly reduced compared to building materials without enhancing material while features such as impact resistance, flexural strength, core hardness, Young's modulus or handling of gypsum boards are as good as in comparable building materials without enhancing material.

While carboxylates have been used in the past as enhancing materials in combination with borates, organic polyphosphonic compounds or mixtures thereof, the enhancing material compounds of the present invention have been found to provide for increased resistance against permanent deformation such as sag in gypsum building material compositions, which are essentially free of organic polyphosphonic compounds and borates. The term "essentially free of" means that in said compositions the amounts of organic polyphosphonic compounds or borates are lower than 0.001% by wt., preferably 0.0005% by wt., more preferably 0.0001% by wt. referred to the amount of calcium sulfate hemihydrate.

In some embodiments of the present invention, the composition for preparation of gypsum building material comprises borates and/or organic or inorganic polyphosphonic compounds.

In some embodiments, the composition for preparation of gypsum building material is essentially free of borates and/or organic or inorganic polyphosphonic compounds.

The invention is illustrated by the following examples, which do not restrict by any means the scope of protection conferred by the claims.

### EXAMPLES:

### Reagents and materials:

Flue gas desulfurization (FGD) calcium sulfate hemihydrate for the lab-size examples is provided from Knauf Gips KG, Iphofen, Germany.

For the upscaled examples calcined natural gypsum is used.

Poly(acrylic acid-co-maleic acid) (PAMA), poly(ethylene-alt-maleic anhydride) (PEMA), poly(methyl vinyl ether-alt-maleic acid) (Pmveama) and poly[(isobutylene-alt-maleic acid ammonium salt)-co-(isobutylene-alt-maleic anhydride)] (P(isam)²) are provided from Sigma-Alrich. Sodium trimetaphosphate (STMP) is provided from Alfa Aesar (for the lab-size examples) and BK Giulini GmbH (Targon CP, for the upscaled examples).

### Lab-size examples:

### Sample preparation:

Generally, the enhancing material is either solubilized in deionized water or mixed as a powder with the (FGD) calcium sulfate hemihydrate. The (FGD) calcium sulfate hemihydrate and the deionized water are mixed with a stirring tool for 10 s at a water to calcium sulfate hemihydrate ratio of 0.8 (30 g of calcium sulfate hemihydrate and 24 ml of deionized water). The prism-shaped gypsum samples are prepared in a prism-shaped form of 16 × 4 × 4 cm (thickness ca. 0.3 cm) on a vibrating table and shaken with an amplitude of 0.7 mm for 2 min. After 2 h of hardening time, the molds are removed and the samples dried until constant weight at 40°C. The samples are subsequently sawed, sanded and polished under water-cooling to the dimensions 40 × 10 × 1 mm. Subsequently the samples again are dried until constant weight at 40°C.

### Creep tests:

The creep tests are performed in miniaturized 3-point bending flexural test. The samples are placed on a support made of two round steel tubes, which have a distance of 25 mm from each other. In the middle of the sample a steel tube with a diameter of 1 cm and a weight of 80 g is placed. The creep experiments are carried out in a conditioning cabinet for 5 days at a temperature of 50 °C, a relative humidity (RH) of 96%. The sag of the samples is measured via a dial gauge. The results are shown in Table 1.

**Table 1**

| Enhancing material | Content of enhancing material (wt.-%) | Average sagging value [mm] |
|---|---|---|
| without | 0 | 1,55 |
| PAMA | 0.005 | 0.84 |
| PAMA | 0.05 | 0.14 |
| PAMA | 0.1 | 0.16 |
| Pema | 0.1 | 0.87 |
| Pema | 0.2 | 0.41 |
| Pema | 0.5 | 0.19 |
| Pmveama | 0.01 | 0.44 |
| Pmveama | 0.5 | 0.53 |
| P(isam)² | 0.01 | 0.85 |
| P(isam)2 | 0.1 | 0.41 |
| P(isam)² | 0.5 | 0.68 |
| STMP | 0.05 | 0.17 |

Table 1 shows the results of the creep tests comprising the various enhancing materials. Here, PAMA, Pema, Pmveama and P(isam)² are used as additive and no enhancing material and STMP are used for comparison.

The results show that all of these additives give lower sagging values than no enhancing material in the sample and at least PAMA gives slightly better results than STMP.

### Upscaled examples:

Conveyor line tests are carried out with and without enhancing material for comparing the improvement of the sag resistance of plasterboards. The produced plasterboards consist of a foamed gypsum core, which is encased by a paperboard web. The boards are produced in accordance with a conventional method, i.e. a gypsum slurry is first produced from calcined natural gypsum, water and with or without the enhancing material and then the slurry is applied on the back of the visible side of the paperboard web. Then the rearside paperboard web is applied to the slurry.

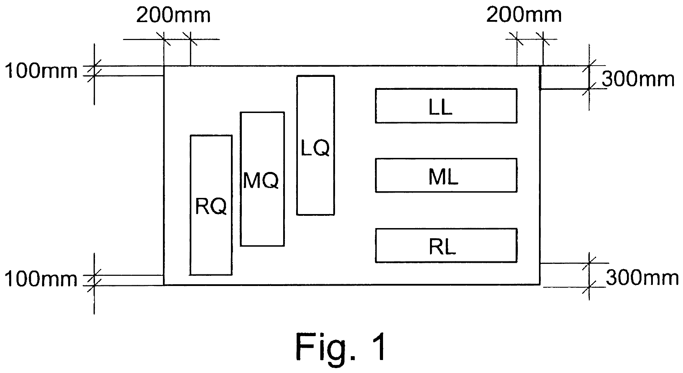

In order to determine the sag of the produced plasterboards, samples measuring 10 cm × 67 cm are cut out from the plasterboards at predefined points, see Fig. 1, of the board. Three longitudinal samples (RL = right longitudinal, ML = middle longitudinal and LL = left longitudinal) and three transverse samples (RQ = right transverse, MQ = middle transverse and LQ = left transverse) are taken per examined board. The longitudinal samples are cut out from the examined boards such that their longitudinal extent runs in the production direction of the boards. The transverse samples are cut out from the examined boards such that their longitudinal extent is arranged perpendicularly to the production direction of the boards. One sample in each case (ML, MQ) is taken from the middle of the board, i.e. with equal distance from the two longitudinal edges of the board, and one sample in each case (LL, LQ and RL, RQ) is taken from a board region arranged closer to the left or right board edge, respectively.

The samples thus removed are then dried, standing on their longitudinal edge, in a drying cabinet until a constant weight is reached, and the zero value for the sag determination (starting sag) is determined by means of a precision depth gauge in the middle of the sample.

The samples are stored, supported at the edge (distance between the supports: 60 cm), in a climate chamber at 20 +/- 1 °C and 90 +/- 1 % relative humidity (RH) for 7 days. The sag is then determined again in the manner described above, and the absolute value is determined by subtracting the starting sag. The values of the three longitudinal samples and the values of the three transverse samples per board are averaged in each case.

In the tests, the sags of plasterboards containing no enhancing material (No. 1 and 3) are compared with plasterboards containing 0.005 to 0.01 wt.-% PAMA (No. 2.1, 2.2 and 4). For better comparison, two sags of each sample (1. sag and 2. sag) have been done.

**Table 2**

| No. | Enhancing material | Direction | | 1. Sag (mm) | Ø 1. Sag (mm) | 2. Sag (mm) | Ø 2. Sag (mm) |
|---|---|---|---|---|---|---|---|
| 1 | without | longitudinal | RL | 5.37 | 5.32 | 5.24 | 5.25 |
| | | | ML | 5.51 | | 5.39 | |
| | | | LL | 5.09 | | 5.12 | |
| | | transverse | RQ | 6.74 | 6.69 | 5.66 | 5.95 |
| | | | MQ | 6.67 | | 5.94 | |
| | | | LQ | 6.67 | | 6.24 | |
| 2.1 | 0.005 wt.-% PAMA | longitudinal | RL | 4.66 | 4.78 | 5.11 | 4.98 |
| | | | ML | 4.79 | | 4.94 | |
| | | | LL | 4.90 | | 4.88 | |
| | | transverse | RQ | 5.91 | 5.77 | 6.65 | 6.70 |
| | | | MQ | 5.45 | | 6.57 | |
| | | | LQ | 5.96 | | 6.87 | |
| 2.2 | 0.01 wt.-% PAMA | longitudinal | RL | 4.39 | 4.44 | 4.57 | 4.60 |
| | | | ML | 4.48 | | 4.71 | |
| | | | LL | 4.45 | | 4.51 | |
| | | transverse | RQ | 4.78 | 4.93 | 5.20 | 5.39 |
| | | | MQ | 4.88 | | 5.46 | |
| | | | LQ | 5.14 | | 5.51 | |

**Table 3**

| No. | Enhancing material | Direction | | 1. Sag (mm) | Ø 1. Sag (mm) | 2. Sag (mm) | Ø 2. Sag (mm) |
|---|---|---|---|---|---|---|---|
| 3 | without | longitudinal | RL | 8.13 | 8.29 | 8.07 | 8.08 |
| | | | ML | 8.28 | | 7.95 | |
| | | | LL | 8.45 | | 8.21 | |
| | | transverse | RQ | 11.29 | 11.04 | 9.53 | 9.80 |
| | | | MQ | 10.56 | | 9.75 | |
| | | | LQ | 11.28 | | 10.11 | |
| 4 | 0.01 wt.-% PAMA | longitudinal | RL | 5.81 | 6.00 | 6.15 | 6.22 |
| | | | ML | 6.09 | | 6.30 | |
| | | | LL | 6.10 | | 6.20 | |
| | | transverse | RQ | 7.44 | 7.39 | 7.29 | 7.47 |
| | | | MQ | 7.56 | | 7.93 | |
| | | | LQ | 7.16 | | 7.20 | |

It is found that the sag of the boards with no enhancing material is in most of the cases higher than the sag of the boards with PAMA. It is worth to mention that different series of samples can produce very different results compared to each other (compare tables 2 and 3 with each other) due to the distinct properties of the calcium sulfate material used in the specific series of samples. Therefore, only a comparison inside one table (i.e. one series of samples) is reasonable.

## Claims

1. A method for preparation of a building material comprising the step of
- preparing a composition comprising calcium sulfate hemihydrate, water and an enhancing material,
wherein the enhancing material is selected from the group consisting of poly(acrylic acid-co-maleic acid), poly(ethylene-alt-maleic anhydride), poly(methyl vinyl ether-alt-maleic acid), poly[(isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

2. The method of claim 1, wherein preparing a composition comprises at least one of the steps of
- addition of the enhancing material to calcium sulfate hemihydrate prior to addition of water; or
- addition of the enhancing material to water prior to the addition of calcium sulfate hemihydrate; or
- simultaneous addition of the enhancing material and water to calcium sulfate hemihydrate; or
- addition of the enhancing material to calcium sulfate hemihydrate to obtain a first composition and addition of the enhancing material to water to obtain a second composition and addition of said first composition to said second composition
- coating of the calcium sulfate hemihydrate with the enhancing material.

3. The method of any one of claims 1 or 2, wherein the enhancing material has a relative molecular weight of 1000 g/mol to 1000000 g/mol, preferably 1000 g/mol to 500000 g/mol, more preferably 2000 g/mol to 500000 g/mol.

4. The method of any one of claims 1 to 3, wherein the amount of the enhancing material is within a range of 0.001 to 2% by weight, preferably 0.01 to 1% by weight, more preferably 0.01 to 0.5% by weight, referred to the amount of calcium sulfate hemihydrate.

5. The method of any one of claims 1 to 4, wherein the pH of the water and/or the composition is higher than 2, preferably between 2 and 7, more preferably between 4 and 6.

6. A building material comprising a calcium sulfate material and an enhancing material, wherein the enhancing material is selected from the group consisting of poly(acrylic acid-co-maleic acid), poly(ethylene-alt-maleic anhydride), poly(methyl vinyl ether-alt-maleic acid), poly[(isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

7. Use of an enhancing material for the preparation of a building material comprising a calcium sulfate material, having enhanced resistance to permanent deformation wherein the enhancing material is selected from the group consisting of poly(acrylic acid-co-maleic acid), poly(ethylene-alt-maleic anhydride), poly(methyl vinyl ether-alt-maleic acid), poly[(isobutylene-alt-maleic acid X salt)-co-(isobutylene-alt-maleic anhydride)], wherein X is selected from the group consisting of ammonium, an alkyl ammonium, an alkali metal ion or an alkali earth metal ion.

## Patentansprüche

1. Verfahren für eine Herstellung eines Baumaterials, umfassend den Schritt
- Herstellen einer Zusammensetzung, umfassend Calciumsulfathemihydrat, Wasser und ein Verstärkungsmaterial,
wobei das Verstärkungsmaterial aus der Gruppe ausgewählt ist, bestehend aus Poly(acrylsäure-co-maleinsäure), Poly(ethylen-alt-maleinsäureanhydrid), Poly(methylvinylether-alt-maleinsäure), Poly[(isobutylen-alt-maleinsäure-X-salz)-co-(isobutylen-alt-maleinsäureanhydrid)], wobei X aus der Gruppe ausgewählt ist, bestehend aus Ammonium, einem Alkylammonium, einem Alkalimetallion oder einem Erdalkalimetallion.

2. Verfahren nach Anspruch 1, wobei das Herstellen einer Zusammensetzung mindestens einen der Schritte umfasst
- Zugabe des Verstärkungsmaterials zu Calciumsulfathemihydrat vor der Zugabe von Wasser; oder
- Zugabe des Verstärkungsmaterials zu Wasser vor der Zugabe von Calciumsulfathemihydrat; oder
- gleichzeitige Zugabe des Verstärkungsmaterials und von Wasser zu Calciumsulfathemihydrat; oder
- Zugabe des Verstärkungsmaterials zu Calciumsulfathemihydrat, um eine erste Zusammensetzung zu erhalten, und Zugabe des Verstärkungsmaterials zu Wasser, um eine zweite Zusammensetzung zu erhalten, und Zugabe der ersten Zusammensetzung zu der zweiten Zusammensetzung
- Beschichten des Calciumsulfathemihydrats mit dem Verstärkungsmaterial.

3. Verfahren nach einem der Ansprüche 1 oder 2, wobei das Verstärkungsmaterial ein relatives Molekulargewicht von 1000 g/mol bis 1000000 g/mol, vorzugsweise 1000 g/mol bis 500000 g/mol, mehr bevorzugt 2000 g/mol bis 500000 g/mol, aufweist.

4. Verfahren nach einem der Ansprüche 1 bis 3, wobei die Menge des Verstärkungsmaterials innerhalb eines Bereichs von 0,001 bis 2 Gew.-%, vorzugsweise 0,01 bis 1 Gew.-%, mehr bevorzugt 0,01 bis 0,5 Gew.-%, liegt, bezogen auf die Menge von Calciumsulfathemihydrat.

5. Verfahren nach einem der Ansprüche 1 bis 4, wobei der pH-Wert des Wassers und/oder der Zusammensetzung höher als 2 ist, vorzugsweise zwischen 2 und 7, mehr bevorzugt zwischen 4 und 6.

6. Baumaterial, umfassend ein Calciumsulfatmaterial und ein Verstärkungsmaterial, wobei das Verstärkungsmaterial aus der Gruppe ausgewählt ist, bestehend aus Poly(acrylsäure-co-maleinsäure), Poly(ethylen-alt-maleinsäureanhydrid), poly(methylvinylether-maleinsäure), Poly[(isobutylen-maleinsäure-X-salz)-co-(isobutylen-maleinsäureanhydrid)], wobei X aus der Gruppe ausgewählt ist, bestehend aus Ammonium, einem Alkylammonium, einem Alkalimetallion oder einem Erdalkalimetallion.

7. Verwendung eines Verstärkungsmaterials für die Herstellung eines Baumaterials, umfassend ein Calciumsulfatmaterial, das eine Resistenz gegenüber permanenter Verformung aufweist, wobei das Verstärkungsmaterial aus der Gruppe ausgewählt ist, bestehend aus Poly(acrylsäure-co-maleinsäure), Poly(ethylen-alt-maleinsäureanhydrid), Poly(methylvinylether-alt-maleinsäure), Poly[(isobutylen-alt-maleinsäure-X-salz)-co-(isobutylen-alt-maleinsäureanhydrid)], wobei X aus der Gruppe ausgewählt ist, bestehend aus Ammonium, einem Alkylammonium, einem Alkalimetallion oder einem Erdalkalimetallion.

## Revendications

1. Procédé de préparation d'un matériau de construction comprenant l'étape de
- préparation d'une composition comprenant du sulfate de calcium hémihydraté, de l'eau et un matériau de renforcement,
dans lequel le matériau de renforcement est choisi dans le groupe constitué de poly(acide acrylique-co-acide maléique), poly(éthylène-alt-anhydride maléique), poly(méthyl vinyl éther-alt-acide maléique), poly[(isobutylène-alt-acide maléique, sel X)-co-(isobutylène-alt-anhydride maléique)], dans lequel X est choisi dans le groupe constitué d'ammonium, d'un alkyl ammonium, d'un ion de métal alcalin ou d'un ion de métal alcalino-terreux.

2. Procédé selon la revendication 1, dans lequel la préparation d'une composition comprend au moins l'une des étapes de
- ajout de l'agent de renforcement au sulfate de calcium hémihydraté avant l'ajout d'eau ; ou
- ajout de l'agent de renforcement à l'eau avant l'ajout du sulfate de calcium hémihydraté ; ou
- ajout simultané du matériau de renforcement et de l'eau au sulfate de calcium hémihydraté ; ou
- ajout de l'agent de renforcement au sulfate de calcium hémihydraté pour obtenir une première composition et ajout de l'agent de renforcement à l'eau pour obtenir une seconde composition et ajout de ladite première composition à ladite seconde composition
- revêtement du sulfate de calcium hémihydraté avec l'agent de renforcement.

3. Procédé selon l'une quelconque des revendications 1 ou 2, dans lequel le matériau de renforcement a une masse moléculaire relative de 1000 g/mol à 1 000 000 g/mol, de préférence 1000 g/mol à 500 000 g/mol, plus préférablement 2000 g/mol à 500 000 g/mol.

4. Procédé selon l'une quelconque des revendications 1 à 3, dans lequel la quantité du matériau de renforcement est comprise dans une plage de 0,001 à 2 % en poids, de préférence 0,01 à 1 % en poids, plus préférablement 0,01 et 0,5 % en poids, par rapport à la quantité de sulfate de calcium hémihydraté.

5. Procédé selon l'une quelconque des revendications 1 à 4, dans lequel le pH de l'eau et/ou de la composition est supérieur à 2, de préférence compris entre 2 et 7, plus préférablement compris entre 4 et 6.

6. Matériau de construction comprenant un matériau de sulfate de calcium et un matériau de renforcement, dans lequel le matériau de renforcement est choisi dans le groupe constitué de poly(acide acrylique-co-acide maléique), poly(éthylène-alt-anhydride maléique), poly(méthyl vinyl éther-alt-acide maléique), poly[(isobutylène-alt-acide maléique, sel X)-co-(isobutylène-alt-anhydride maléique)], dans lequel X est choisi dans le groupe constitué d'ammonium, d'un alkyl ammonium, d'un ion de métal alcalin ou d'un ion de métal alcalino-terreux.

7. Utilisation d'un matériau de renforcement pour la préparation d'un matériau de construction comprenant un matériau de sulfate de calcium, ayant une résistance renforcée à la déformation permanente, dans laquelle le matériau de renforcement est choisi dans le groupe constitué de poly(acide acrylique-co-acide maléique), poly(éthylène-alt-anhydride maléique), poly(méthyl vinyl éther-alt-acide maléique), poly[(isobutylène-alt-acide maléique, sel X)-co-(isobutylène-alt-anhydride maléique)], dans laquelle X est choisi dans le groupe constitué d'ammonium, d'un alkyl ammonium, d'un ion de métal alcalin ou d'un ion de métal alcalino-terreux.
